# EUROPEAN PATENT APPLICATION

(11) **EP 1 054 334 A2**
(43) Date of publication of application: **22.11.2000**
(21) Application number: 00110249.0
(22) Date of filing: 19.05.2000
(51) Int. Cl.: G06F 17/60

(54) **Method and apparatus for evaluating environmental load**

(30) Priority: 19.05.1999 JP 13897499
(71) Applicant: NEC CORPORATION, Tokyo (JP)
(72) Inventor: Tekawa, Masafumi, Minato-ku, Tokyo (JP)
(74) Representative: Baronetzky, Klaus, Dipl.-Ing.

(57) **Abstract**

A method for evaluating an environmental load including the steps of: selecting specified data items for investigation; and calculating the environmental load based on data of the evaluated product in connection with the selected data items and environmental load data per unit amount of the data items. The number of the items to be evaluated can be reduced because the items are selected in advance depending on the species of the evaluated product, and the range to be evaluated is restricted not to necessitate the evaluation of all the steps.

## Description

### BACKGROUND OF THE INVENTION

### (a) Field of the Invention

The present invention relates to a method and an apparatus for evaluating an environmental load of a product such as an electronic product, more in detail, to the method and the apparatus for evaluating the environmental load, such as consumed amounts of raw materials and energy, and discharged amounts of waste generated during the lifecycle of the product.

### (b) Description of the Related Art

A conventional method for evaluating the environmental load of a product has been conducted by measuring the amount of toxic substances generated during a part of the manufacturing process of the product. However, it is difficult to apply the evaluating method to discharge such as carbon dioxide (CO₂), sulfur oxides (SOx) and nitrogen oxides (NOx), generated in multiple steps, which is a main factor of the global environmental problems such as global warming and acid rain.

A method for quantitatively evaluating the environmental load from manufacture of the product to the disposal thereof, which is known as lifecycle assessment, has been researched. The lifecycle assessment is a process of calculating the total environmental loads of a product to be evaluated, which is conducted by obtaining and adding the respective values of environmental loads such as the amount and the species of raw materials, discharged materials, consumed and generated in each of steps including collection of the raw materials, manufacture of starting materials, manufacture of components, and manufacture, use and disposal of the product during the lifecycle of the product from the manufacture to the disposal. The lifecycle assessment enabling the quantitative evaluation of the environmental load of the product is an important evaluation method for designing an environment-friendly product.

A method and apparatus for conducting the lifecycle assessment to evaluate the environmental load of a product are described, for example, in JP-A-7(1995)-311760. The object of the method described therein is to effectively evaluate the total environmental loads from the manufacture to the disposal of a product having a complicated configuration. The method includes a group of total steps in connection with a product to be evaluated, including steps of manufacturing the product to be evaluated, manufacturing components of the product, disposing the product, disposing the product parts obtained by dismantling the product, using the product, and transporting the product components and the product pieces.

The total steps are separated into first virtual steps for manufacture of the evaluated product expressed as a tree-structure having a root representing the product and a node representing each unit step, and second virtual steps for the disposal of the evaluated product expressed as a tree-structure having a root representing the product and a node representing each unit step. In the tree-structure, correlations are defined among the unit steps, and the total environmental load values of the evaluated product are calculated by using the environmental load value generated in each of the unit steps based on the defined correlation among the unit steps.

It is noticed that the proposed method includes the following problems.

In the conventional method and apparatus, it is necessary to decide, at first, the environmental load in the steps of manufacturing the product to be evaluated, decide the environmental load in the steps of manufacturing the material and the components used in the product manufacturing step, and then sun these environmental loads in all the steps. However, the diversity of the product requires a significant number of items to be investigated, which makes it difficult to investigate and sum up the environmental loads generated in all the steps every time the product is investigated. The environmental loads in some of the steps are smaller with respect to those of the total lifecycle, and many environmental loads having a lower necessity must be inevitably investigated. It is difficult to select the step to be investigated for a person not skilled in the environmental load evaluation by means of the lifecycle assessment.

### SUMMARY OF THE INVENTION

In view of the foregoing, an object of the present invention is to provide a method and an apparatus for evaluating an environmental load by easily summing up the environmental loads during the lifecycle of a product.

The present invention provides, in a first aspect thereof, a method for evaluating an environmental load including the steps of: evaluating a unit environmental load generated from a unit amount of each of all data items for investigation; selecting specific data items among all the data items in the data base depending on species of a product to be evaluated: evaluating a number of unit amounts involved in the product for each of the specific data items; and calculating an environmental load based on the evaluated number of unit amounts for each of the specific data items and a corresponding unit environmental load.

The present invention provides, in a second aspect thereof, an apparatus for evaluating environmental load including: a data base tabulating a unit environmental load for a unit amount of data items for investigation; a selection section for selecting specific data items among all the data items in the data base depending on species of a product to be evaluated: an evaluation section for evaluating a number of unit amounts involved in the product for each of the specific data items; and a calculation section for calculating an environmental load based on the evaluated number of unit amounts for each of the specific data items and a corresponding unit environmental load retrieved in said data base.

In accordance with the present invention, the number of the items to be evaluated can be reduced because the items to be investigated and input are selected in advance depending on the species of the evaluated product. Accordingly, the range to be evaluated is restricted not to necessitate the evaluation of all the steps during the lifecycle of the evaluated product, and the evaluation can be conveniently conducted.

The above and other objects, features and advantages of the present invention will be more apparent from the following description.

### BRIEF DESCRIPTION OF DRAWINGS

Fig.1 is a block diagram showing an example of an apparatus for evaluating an environmental load in accordance with the present invention.

Fig.2 is a flow chart showing an operation of the apparatus of Fig.1.

Fig.3 is an exemplified list of data items in a first embodiment of the present invention for evaluating the environmental load of a sheet-metal component.

Fig.4 is an exemplified list of data items in a second embodiment for evaluating the environmental load of a plastic component.

Fig.5 is an exemplified list of data items in a third embodiment for evaluating the environmental load of a circuit board.

Fig.6 is an exemplified list of data items in a fourth embodiment for evaluating the environmental load of an electronic product.

### PREFERRED EMBODIMENTS OF THE INVENTION

Now, the present invention is more specifically described with reference to accompanying drawings.

### First Embodiment

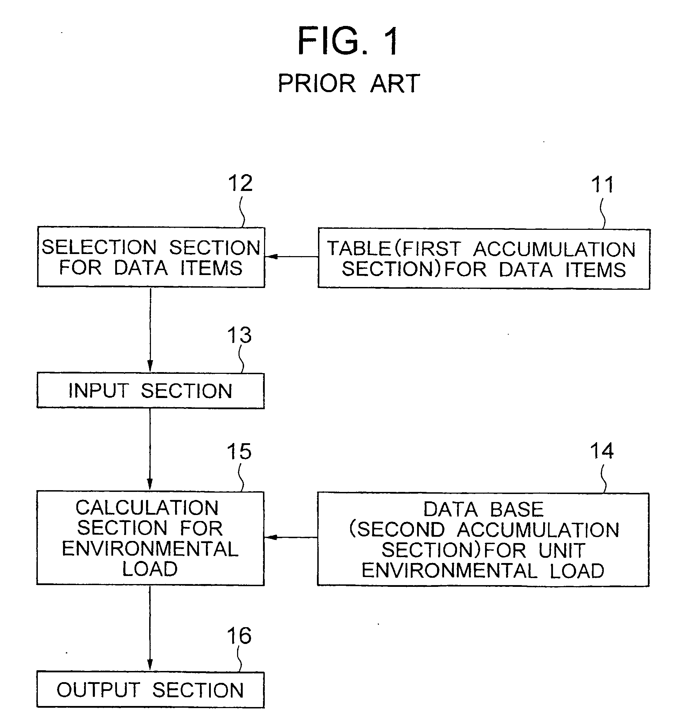

An apparatus for evaluating an environmental load of the present invention exemplified in a block diagram of Fig.1 includes a first accumulation section (table) 11 for accumulating data for data items for investigation, a selection section 12 for the data items, an input section 13, a second accumulation section (data base) 14 for accumulating unit environmental load data, a calculation section 15 for the environmental load and an output section 16.

The first accumulation section 11 accumulates combinations of the data items necessary for calculating the environmental load for every species of various products. The selection section 12 selects the specified data items with respect to the evaluated product from the first accumulation section 11. The input section 13 inputs data of the data items selected in connection with the evaluated product. The second accumulation section 14 accumulates environmental load data per unit amount of the data items. The calculation section 15 calculates an environmental load from the data input at the input section 13 and the environmental load data accumulated in the second accumulation section 14. The output section 16 outputs the result of the environmental load calculated at the calculation section 15. The result of the environmental load can be output by a displaying output using a display device and a printing output using a printer.

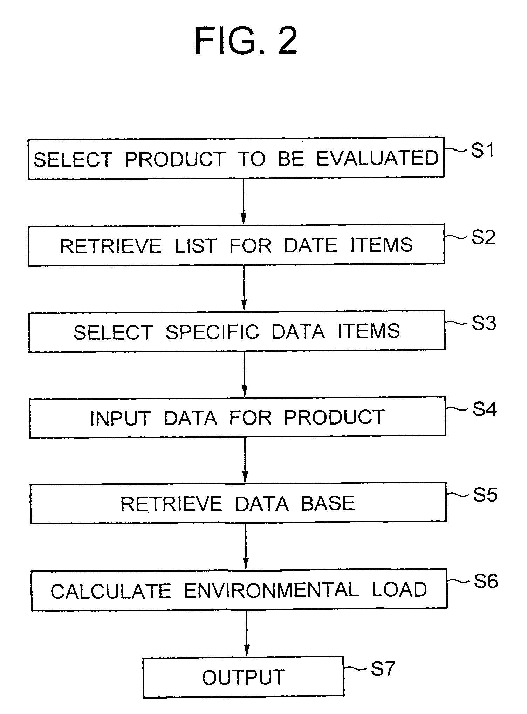

Referring to Fig.2 which is a flow chart for illustrating an operation of the environmental load evaluating apparatus of Fig.1, an operator determines a product to be evaluated (step S1). Then, after referring to the first accumulation section 11 at the selection section 12 (step S2), the specified data items necessary for evaluating the environmental load depending on the species of the product determined in the step S1 are selected (step S3). Then, data in connection with the evaluated product is input to the input section 13 in accordance with each of the data items selected at the selection section 12 in the step S3 (step S4). The environmental load data per unit amount of the respective data items accumulated at the second accumulation section 14 is referred to based on the data input from the input section 13 in the step S4 (step S5), and the environmental loads of the evaluated products are summed up at the calculation section 15 (step S6). Thereafter, the summed-up data are output at the output section 16, and the environmental load of the evaluated product is displayed (step S7).

The environmental load data per unit amount include, for example, those per 1 kg of steel during its lifecycle and those per one bending step among a series of processing steps.

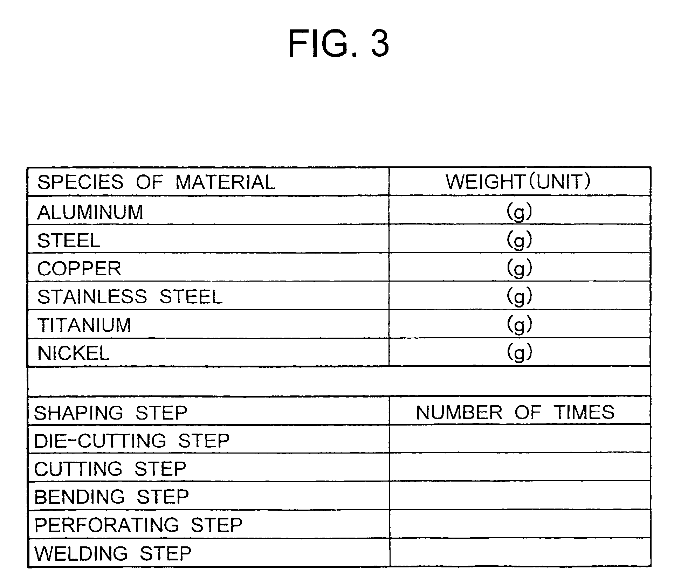

Concretely, in a first embodiment of the present invention, a sheet-metal component was selected for evaluating an environmental load during manufacture thereof. At first, the sheet-metal components to be evaluated were determined (step S1). Then, the first accumulation section 11 was referred to at the selection section 12 (step S2), and the specified data items (examples thereof are shown in Fig.3, though each of the columns in connection with weight is blank, these are filled with values of the respective materials contained in the product) required for evaluating the environmental loads of the sheet-metal components determined in the step S1 were selected (step S3). The data items for evaluating the sheet-metal components were species and weights of each of the materials therein and species and a number of shaping steps. As shown in Fig.3, the material included aluminum, steel, copper, stainless steel, titanium and nickel, and the shaping steps included a die-cutting step, a cutting step, a bending step, a perforating step and a welding step.

Then, in accordance with the data items of Fig.3 selected in the step S3, the data in connection with the species and the weight of the material of the evaluated sheet-metal components and the species and the number of the shaping steps were input at an input section 13 (step S4). Based on the data input in the step S4, environmental load data in the second accumulation section 14 for accumulating environmental load data per unit amount for every species of the material and for every species of the shaping step were referred to (step S5) and the environmental loads for the evaluated product were summed up at a calculation section 15 (step S6). Thereafter, the environmental loads summed up in the step S6 were output at an output section 16, and the environmental loads of the evaluated product were displayed (step S7). An example of summing-up of the environmental loads is shown in Table 1 in which carbon dioxide (CO₂), sulfur oxides (SOx) and nitrogen oxides (NOx) are listed as representative environmental load items. Summed-up amounts of the environmental loads are obtained as amounts of discharge. Another discharge gas such as carbon monoxide (CO) can be calculated in a similar manner, and amounts of discharge of each of the sulfur oxides such as SO, S₂O₃, SO₂ and SO₃, and each of the nitrogen oxides such as N₂O, NO, N₂O₃, NO₂ and N₂O₅ can be individually calculated.

**Table 1**

| Environmental Load Items | Summed Up-Amount of Discharge (unit) |
|---|---|
| CO₂ | 1.3 (kg) |
| NOx | 0.9 (g) |
| SOx | 1.4 (g) |

In accordance with the apparatus for evaluating the environmental load of the first embodiment of the present invention, the data items and the input items for calculating the environmental load of the sheet-metal components are restricted to the species and the weight of each of the materials and to the species and the number of the shaping steps. Accordingly, the investigation is quite easily conducted and the evaluation can be also conveniently conducted.

In the first embodiment, the environmental loads were obtained by listing the above data items, but the environmental loads can be evaluated more precisely by selecting more detailed data items.

### Second Embodiment

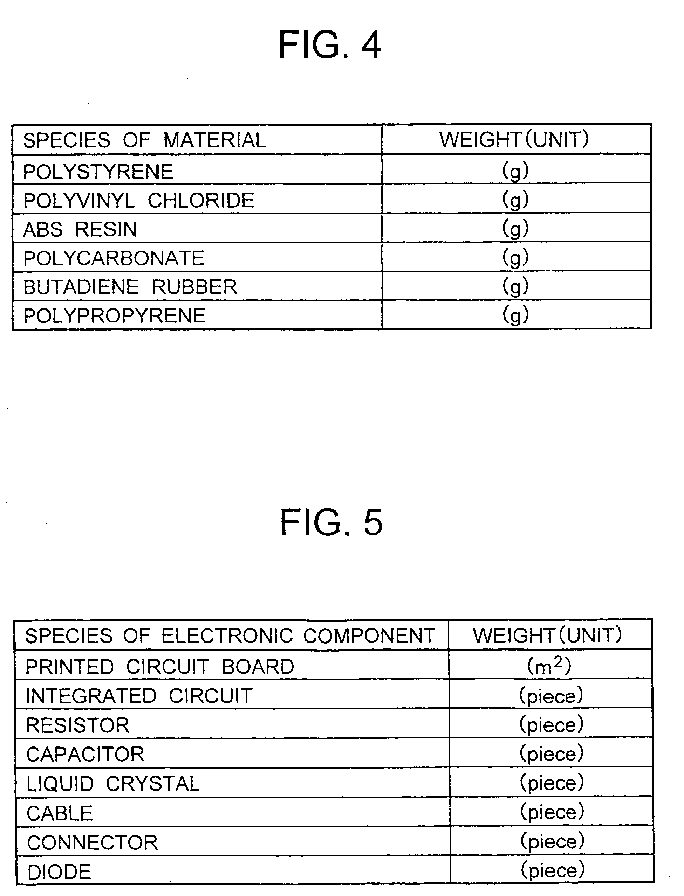

In a second embodiment of the present invention for evaluating environmental loads during manufacture of plastic components, the plastic components to be evaluated were determined (step S1). Then, a first accumulation section (table) 11 was referred to at a selection section 12 (step S2), and the specified data items (examples thereof are shown in Fig.4) required for evaluating the environmental loads of the plastic components determined in the step S1 were selected (step S3). The data items were species and weights of each of materials of the plastic component. As shown in Fig.4, the material included polystyrene, polyvinyl chloride, ABS resin, polycarbonate, butadiene rubber and polypropylene.

Then, in accordance with the data items of Fig.4 selected in the step S3, the data in connection with the species and the weights of the materials of the evaluated plastic components were input at an input section 13 (step S4). Based on the data input in the step S4, environmental load data in a second accumulation section 14 were referred to (step S5) and the environmental loads for the evaluated plastic component were summed up at a calculation section 15 (step S6). Thereafter, the environmental loads summed up in the step S6 were output at an output section 16, and the environmental loads of the plastic component were displayed (step S7).

In accordance with the apparatus for evaluating the environmental load of the second embodiment, the data items and the input items for calculating the environmental load of the plastic component are restricted to the species and the weight of the materials. Accordingly, the investigation is quite easily conducted and the evaluation can be also conveniently conducted.

### Third Embodiment

In a third embodiment of the present invention for evaluating environmental loads during manufacture of a circuit board, the circuit board to be evaluated was determined (step S1). Then, a first accumulation section (table) 11 was referred to at a selection section 12 (step S2), and the specified data items (examples thereof are shown in Fig.5) required for evaluating the environmental loads of the circuit board determined in the step S1 were selected (step S3). The data items for evaluating the circuit board were species and a number of electronic components mounted on the circuit board. As shown in Fig.5, the electronic components included a printed circuit board, an integrated circuit, a resistor, a capacitor, liquid crystals, a cable, a connector and a diode.

Then, in accordance with the data items of Fig.5 selected in the step S3, the data in connection with the species and the number of the electronic components mounted on the circuit board were input at an input section 13 (step S4). Based on the data input in the step S4, environmental load data in a second accumulation section 14 were referred to (step S5) and the environmental loads for the evaluated circuit board were summed up at a calculation section 15 (step S6). Thereafter, the environmental loads summed up in the step S6 were output at an output section 16, and the environmental loads of the circuit board were displayed (step S7).

In accordance with the apparatus of the third embodiment, the data items and the input items for calculating the environmental load of the circuit board are restricted to the species and the number of the electronic components mounted on the circuit board. Accordingly, the investigation is quite easily conducted and the evaluation can be also conveniently conducted.

### Fourth Embodiment

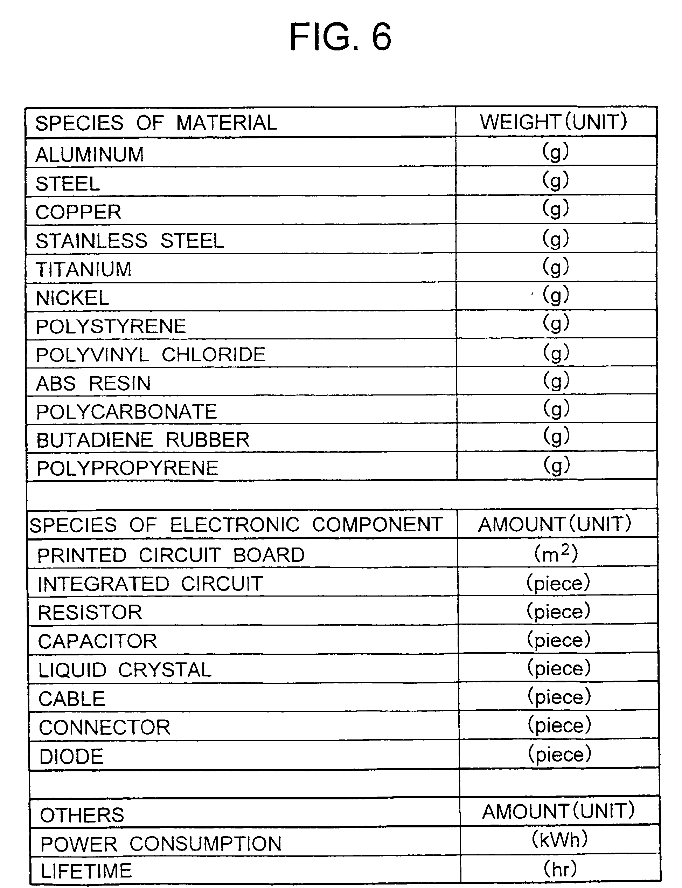

In a fourth embodiment of the present invention for evaluating environmental loads during manufacture of an electronic product, the electronic product to be evaluated was determined (step S1). Then, a first accumulation section (table) 11 was referred to at a selection section 12 (step S2), and the specified data items (examples thereof are shown in Fig.6) required for evaluating the environmental loads of the electronic product determined in the step S1 were selected (step S3). The data items for evaluating the electronic product were species and weights of each of materials used in the electronic product, species and a number of electronic components, power consumption and a lifetime. As shown in Fig.6, the material included aluminum, steel, copper, stainless steel, titanium, nickel, polystyrene, polyvinyl chloride, ABS resin, polycarbonate, butadiene rubber and polypropylene, and the electronic products included a printed circuit board, an integrated circuit, a resistor, a capacitor, liquid crystals, a cable, a connector and a diode.

Then, in accordance with the data items of Fig.6 selected in the step S3, the data in connection with the species and the weights of the material used in the evaluated electronic product, the species and the number of the electronic components, the power consumption and the lifetime were input at an input section 13 (step S4). Based on the data input in the step S4, environmental load data in a second accumulation section 14 were referred to (step S5) and the environmental loads for the evaluated electronic product were summed up at a calculation section 15 (step S6). Thereafter, the environmental loads summed up in the step S6 were output at an output section 16, and the environmental loads of the electronic product were displayed (step S7).

In accordance with the apparatus of the fourth embodiment, the data items and the input items for calculating the environmental load of the electronic product are restricted to the species and the weights of the materials used in the electronic product, the species and the number of the electronic components, the power consumption and the lifetime. Accordingly, the investigation is quite easily conducted and the evaluation can be also conveniently conducted.

As described above, in accordance with the present invention, the following effects can be obtained because the environmental load is obtained by selecting the specified data items depending on the evaluated product and conducting the calculation based on the data of the evaluated product in connection with the selected data items and the environmental load data per unit amount of the data items.

When the environmental load of the product is evaluated during the lifecycle thereof, the number of the items to be evaluated can be reduced because the items to be investigated and input are selected in advance depending on the species of the evaluated product. Further, by inputting only the data of the evaluated product in connection with the selected data items, the environmental load can be calculated from the input data and the environmental load data per unit amount of the accumulated data items.

Accordingly, the range to be evaluated is restricted not to necessitate the evaluation of all the steps during the lifecycle of the evaluated product, and the evaluation can be conveniently conducted. Further, such a problem that an environmental load in a step of little necessity is also evaluated can be solved. Even a person not skilled in the environmental load evaluation by means of the lifecycle assessment can without difficulty select the steps to be investigated for the evaluation.

Since the above embodiments are described only for examples, the present invention is not limited to the above embodiments and various modifications or alternations can be easily made therefrom by those skilled in the art without departing from the scope of the present invention.

## Claims

1. A method for evaluating an environmental load characterized by the steps of:
evaluating a unit environmental load generated from a unit amount of each of all data items for investigation;
selecting specific data items among all the data items in the data base depending on species of a product to be evaluated:
evaluating a number of unit amounts involved in the product for each of the specific data items; and
calculating an environmental load based on the evaluated number of unit amounts for each of the specific data items and a corresponding unit environmental load.

2. The method as defined in claim 1, wherein the product is a sheet metal, and the specific data items therefor include species and weight of each of materials therein, and species and a number of each of shaping steps applied therefor.

3. The method as defined in claim 1, wherein the product is a plastic component, and the specific data items therefor include species and weight of each of materials therein.

4. The method as defined in claim 1, wherein the product is a circuit board, and the specific data items therefor include species and weight of each of electronic components mounted thereon.

5. The method as defined in claim 1, wherein the product is an electronic product, and the specific data items therefor include species and weight of each of materials therein, species and a number of electronic components in the electronic product, power consumption of a lifetime.

6. An apparatus for evaluating environmental load characterized by comprising:
a data base (11) tabulating a unit environmental load for a unit amount of data items for investigation;
a selection section (12) for selecting specific data items among all the data items in the data base (11) depending on species of a product to be evaluated:
an evaluation section for evaluating a number of unit amounts involved in the product for each of the specific data items; and
a calculation section (15) for calculating an environmental load based on the evaluated number of unit amounts for each of the specific data items and a corresponding unit environmental load retrieved in said data base (11).

7. The apparatus as defined in claim 6, wherein the product is a sheet metal, and the specific data items therefor include species and weight of each of materials therein, and species and a number of each of shaping steps applied therefor.

8. The method as defined in claim 6, wherein the product is a plastic component, and the specific data items therefor include species and weight of each of materials therein.

9. The method as defined in claim 6, wherein the product is a circuit board, and the specific data items therefor include species and weight of each of electronic components mounted thereon.

10. The method as defined in claim 6, wherein the product is an electronic product, and the specific data items therefor include species and weight of each of materials therein, species and a number of electronic components in the electronic product, power consumption of a lifetime.
